# EUROPEAN PATENT APPLICATION

(11) **EP 4 470 412 A1**
(43) Date of publication of application: **04.12.2024**
(21) Application number: 22923882.9
(22) Date of filing: 28.01.2022
(51) Int. Cl.: A44B 18/00

(54) **HOOK-AND-LOOP FASTENER PRODUCTION METHOD**

(71) Applicant: YKK CORPORATION, Chiyoda-ku Tokyo 101-8642 (JP)
(72) Inventor: NAOHARA, Masayuki, Kurobe-shi, Toyama 938-8601 (JP); YOKOYAMA, Shoichi, Kurobe-shi, Toyama 938-8601 (JP)
(74) Representative: Leinweber & Zimmermann
(86) International application number: PCT/JP2022/003404
(87) International publication number: WO 2023/145018

(57) **Abstract**

A method of manufacturing a surface fastener according to the present invention is a manufacturing method of manufacturing a surface fastener made of synthetic resin, the surface fastener including a base part (71) and a plurality of engaging elements (62). The method includes a molding step of molding a pre-fastener body (60) from the synthetic resin that is melted, the pre-fastener body (60) including the plurality of engaging elements (62); and a thickness-adjusting step of adjusting, after the molding step, a thickness dimension of the surface fastener by pressing in the thickness direction the pre-fastener body (60) or a deformed fastener body (70), the deformed fastener body (70) being obtained by performing a deforming process at least once on at least a portion of the pre-fastener body (60). The thickness-adjusting step includes varying an amount of reduction in a thickness dimension of the stem portion (64) between at least two of the engaging elements (62) by applying respectively different pressing forces to the at least two engaging elements (62), the at least two engaging elements (62) being located at respectively different positions in the cross direction (CD). The method enables stable manufacture of a surface fastener with a total thickness dimension thereof being appropriately controlled at different widthwise positions.

## Description

### Technical Field

The present invention relates to a method of manufacturing a surface fastener.

### Background Art

Hitherto known surface fastener products include a one provided as a combination of a female surface fastener (hereinafter referred to as a loop member) having a plurality of loops and a male surface fastener attachable to and detachable from the loop member. The male surface fastener includes, for example, a flat base part and a plurality of engaging elements. The engaging elements project from the base part and are each shaped like a mushroom or the like.

Currently, surface fasteners are in wide uses among various products including items to be detachably put on any part of the body: for example, disposable diapers, infant diaper covers, supporters for protecting joints of limbs and the like, waist corsets (belts for lower-back pain), gloves, and so forth. An exemplary surface fastener intended for disposable diapers and the like is disclosed in

International Publication No. 2017/109902 (PTL 1).

The surface fastener disclosed in PTL 1 includes a base part and a plurality of engaging elements projecting from the base part. The engaging elements disclosed in PTL 1 each include a stem portion standing from the base part, and a disc-shaped engaging head provided integrally with the upper end of the stem portion. The engaging head has a plurality of microsized pawl portions projecting from the outer peripheral edge of the engaging head.

In the surface fastener disclosed in PTL 1, the microsized pawl portions provided at the engaging heads of the engaging elements facilitate the engagement of the loops of the loop member with the engaging elements and make it difficult for the loops once engaged to be disengaged from the engaging elements. Thus, an increased engaging strength (peel strength) is provided to the loop member of the surface fastener. Furthermore, according to PTL 1, since the pawl portions contributing to the increase in the engaging strength are provided in microsizes at the outer peripheral edges of the engaging heads, the influence of the pawl portions upon the feel of the surface fastener is reduced. Consequently, a surface fastener with an increased engaging strength and a favorable surface feel is provided.

To manufacture the surface fastener disclosed in PTL 1, a primary molding step is first performed. In the primary molding step, molten thermoplastic resin is continuously extruded onto the outer peripheral surface of a rotating die wheel (die), whereby a primary molded body is obtained that includes a base part and a plurality of primary elements provided on the base part.

Subsequently, the primary molded body including the plurality of primary elements is transported to a hot pressing device configured to perform a secondary molding step. In the secondary molding step, the primary molded body is introduced between a pair of upper and lower rollers included in the hot pressing device, whereby the upper ends of the primary elements are pressed and deformed by the upper roller. Thus, the primary elements are molded into engaging elements each including an engaging head. Through the above secondary molding step, the surface fastener disclosed in PTL 1 is obtained.

### Citation List

### Patent Literature

PTL 1: International Publication No. 2017/109902

### Summary of Invention

### Technical Problem

In recent years, to reduce the manufacturing cost of the surface fastener and to increase the flexibility of the surface fastener, a demand has been increasing for reduction in the thickness of the base part that is defined between the upper surface (a first surface) and the lower surface (a second surface) thereof. As for the above primary molding step employing a die wheel, however, there is a limit for the reduction in the thickness of the base part that is molded on the outer peripheral surface of the die wheel, Nevertheless, further thickness reduction is demanded.

As an alternative measure for reducing the thickness of the base part, a uniaxial drawing process may be performed in which, for example, a surface fastener obtained in the secondary molding step is delivered to a drawing device, where the base part is drawn in a machining direction (transporting direction) while the surface fastener is heated. In such a uniaxial drawing process, since the surface fastener is drawn in the machining direction, the thickness dimension of the base part becomes smaller than before the performance of the drawing process.

If the uniaxial drawing process is performed, however, a dimension of the thickness direction from the lower surface of the base part to the upper ends of the engaging elements (that is, the total thickness dimension of the surface fastener) is reduced by a greater amount in a widthwise central area of the surface fastener than in left and right end areas located on the widthwise outer sides of the surface fastener. Consequently, the total thickness dimension of the surface fastener subjected to the uniaxial drawing process varies in the width direction in such a manner as to be reduced from each of the left and right end areas toward the central area.

The surface fastener having such a thickness variation in the width direction tends to have defects, such as some slack or wavy wrinkles, in the base part thereof. Furthermore, if a surface fastener having a thickness variation in the width direction is, for example, wound into a roll to be collected after the completion of manufacture thereof, the left and right end areas of the roll of the surface fastener may partially bulge, or the base part of the roll of the surface fastener may have wrinkles (wrinkles due to winding). If such partial bulging or wrinkles due to winding remain in the surface fastener, the quality or performance of the surface fastener may be deteriorated.

Even if the variation of the thickness of the surface fastener in the width direction is negligible with the surface fastener being in a sheet form, the thickness variation may be amplified when the surface fastener is wound into a roll after the completion of manufacture thereof. Consequently, even a slight thickness variation not attributed to the drawing process may deteriorate the quality or performance of the surface fastener.

On the other hand, depending on the use or the like of the surface fastener for example, there may be a demand for a surface fastener with a total thickness dimension from the lower surface of the base part to the upper ends of the engaging elements being intentionally or positively varied in the width direction, or a surface fastener including engaging elements whose dimensions of thickness direction are intentionally or positively varied with the positions thereof in the width direction. Nevertheless, to manufacture such a surface fastener through, for example, the method disclosed in PTL 1, the die of the molding device to be used in the primary molding step needs to be renewed in conformity with the shape of the surface fastener to be manufactured. Such a renewal leads to an increase in the manufacturing cost and a difficulty in prompt response to customers' requests.

The present invention has been conceived in view of the above problems, and an object of the present invention is to provide a method of manufacturing a surface fastener that enables stable manufacture of a surface fastener with a dimension of a thickness direction, from a second surface of a base part to the top ends of engaging elements provided on a first surface of the base part, being appropriately controlled at different positions of width direction. Solution to Problem

To achieve the above object, the present invention provides a method of manufacturing a surface fastener made of synthetic resin, the surface fastener including a base part and a plurality of engaging elements, the base part having a first surface and a second surface that are located opposite each other, the engaging elements each including a stem portion and an engaging head, the stem portion projecting in a thickness direction from the first surface of the base part, the engaging head formed integrally with a distal end of the stem portion, the engaging head having a shape that spreads outwardly in a direction orthogonal to the thickness direction to the distal end of the stem portion, the method being characterized by comprising a molding step of molding a pre-fastener body from the synthetic resin that is melted, the pre-fastener body including the plurality of engaging elements, and a thickness-adjusting step of adjusting, after the molding step, a thickness dimension of the surface fastener by pressing the pre-fastener body or a deformed fastener body in which at least a portion of the pre-fastener body is subject to at least once deformation process, in the thickness direction to decrease the thickness dimension of at least a portion of the pre-fastener body or the deformed fastener body, wherein, when a direction orthogonal to a machining direction of the thickness-adjusting step is defined as a cross direction, the thickness-adjusting step includes making difference of reduction amounts of the stem portions in a thickness dimension between at least two of the engaging elements by applying respectively different pressing forces to the at least two engaging elements, the at least two engaging elements being located at different positions each other of the pre-fastener body or the deformed fastener body in the cross direction.

In the manufacturing method according to the present invention, it is preferable that the method includes introducing the pre-fastener body or the deformed fastener body between a pair of upper and lower thickness-adjusting rollers to press the pre-fastener body or the deformed fastener body in the thickness direction, in the thickness-adjusting step and heating at a temperature lower than or equal to a melting point of the synthetic resin the pre-fastener body or the deformed fastener body with at least one of the upper thickness-adjusting roller and the lower thickness-adjusting roller.

In the manufacturing method according to the present invention, it is preferable that the method includes molding a tentative base part that is formed integrally with the plurality of engaging elements and that supports the engaging elements in the molding step; and forming the deformed fastener body after the molding step and before performing the thickness-adjusting step, the deformed fastener body being obtained by performing a drawing step of drawing the pre-fastener body in the machining direction to decrease a thickness dimension of the tentative base part and to deform the tentative base part into the base part.

In the manufacturing method according to the present invention, it is preferable that the method includes applying a greater pressing force to the engaging elements that are located on an outer side relative to the central area in the cross direction than to the engaging elements that are located in the central area in the cross direction in the thickness-adjusting step.

In the manufacturing method according to the present invention, it is preferable that the method includes making a dimension of a total thickness of the surface fastener uniform in the cross direction by performing pressing in the thickness direction, the dimension of the total thickness being a dimension in the thickness direction from the second surface of the base part to top ends of the engaging elements in the thickness-adjusting step.

In the manufacturing method according to the present invention, it is preferable that the method includes forming the engaging elements of at least two kinds at respectively different positions in the cross direction, the engaging elements of the at least two kinds differ from each other in the stem widths at a central part of the stem portions in the thickness direction in the thickness-adjusting step.

In the manufacturing method according to the present invention, it is preferable that the method includes forming at least a first engaging element and a second engaging element in the thickness-adjusting step, the first engaging element being disposed in a central area of the base part in the cross direction, the second engaging element being disposed on an outer side relative to the central area in the cross direction and having a greater stem width at a central part of the stem portions in the thickness direction than the first engaging element.

In the manufacturing method according to the present invention, it is preferable that the method includes forming at least two of the engaging elements such that the respective engaging heads have identical shapes, the at least two engaging elements being located at respectively different positions in the cross direction.

### Advantageous Effects of Invention

The manufacturing method according to the present invention enables stable manufacture of the surface fastener with the dimension of the thickness direction, from the second surface of the base part to the top ends of the engaging elements provided on the first surface of the base part, being appropriately controlled at different positions of width direction.

### Brief Description of Drawings

[Fig. 1] Fig. 1 is a schematic diagram schematically illustrating a manufacturing apparatus employed in a manufacturing method according to an example of the present invention.
[Fig. 2] Fig. 2 is a schematic perspective view of an outer cylinder and an inner cylinder provided in a primary molding device included in the manufacturing apparatus illustrated in Fig. 1.
[Fig. 3] Fig. 3 is a schematic diagram schematically illustrating a deforming device included in the manufacturing apparatus illustrated in Fig. 1.
[Fig. 4] Fig. 4 is a sectional view of relevant part of a thickness-adjusting roller, illustrated in Fig. 3, taken along line IV-IV.
[Fig. 5] Fig. 5 is a sectional view of relevant part of a thickness-adjusting roller according to a modification.
[Fig. 6] Fig. 6 is a schematic perspective view of a primary molded body to be molded in a primary molding step by the molding device.
[Fig. 7] Fig. 7 is a schematic perspective view of a pre-fastener body to be molded by the molding device.
[Fig. 8] Fig. 8 is a front view, in a machining direction, of an engaging element included in the pre-fastener body illustrated in Fig. 7.
[Fig. 9] Fig. 9 is a front view, in the machining direction, of a deformed fastener body (drawn fastener body) to be obtained after a drawing process performed by the deforming device.
[Fig. 10] Fig. 10 is a front view, in the machining direction, of an engaging element of a surface fastener to be manufactured through the manufacturing method according to the example.
[Fig. 11] Fig. 11 is a front view, in the machining direction, of another engaging element of the surface fastener to be manufactured through the manufacturing method according to the example.

### Description of Embodiments

A preferred embodiment of the present invention will now be described in detail with examples and with reference to the drawings. The present invention is not limited to the following embodiment in any way and may be modified in various ways as long as such modifications provide substantially the same configuration and produce the same advantageous effects as the present invention.

### EXAMPLES

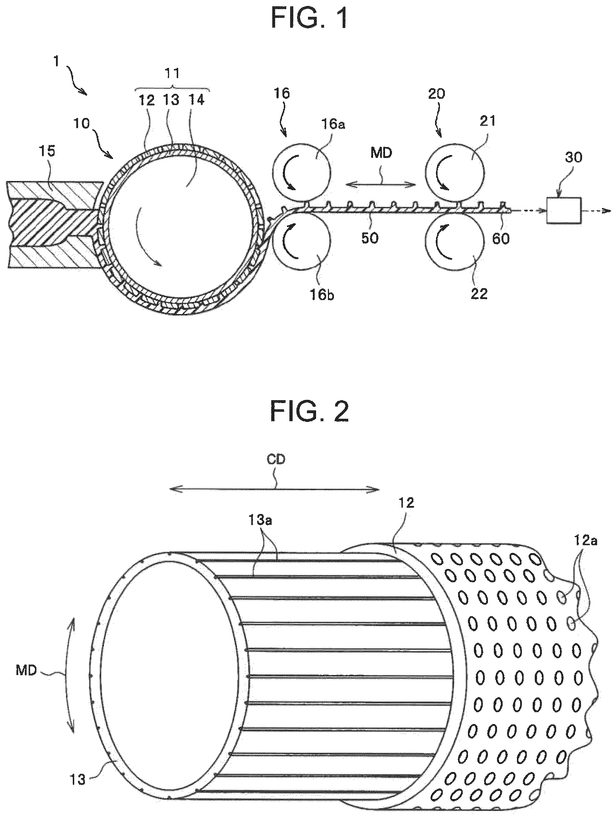

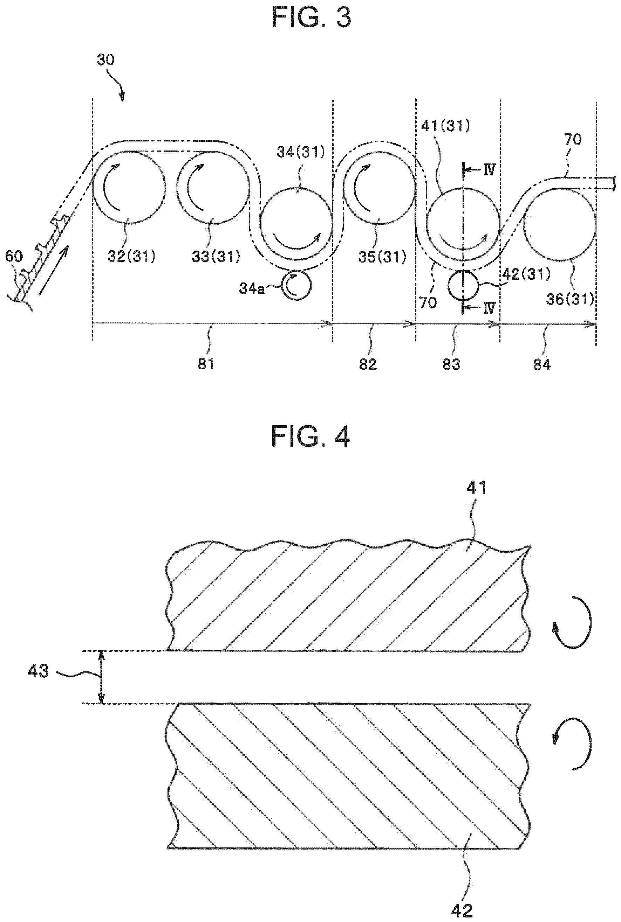

Fig. 1 is a schematic diagram schematically illustrating a manufacturing apparatus employed in a manufacturing method according to the present example. Fig. 2 is a schematic perspective view of an outer cylinder and an inner cylinder provided in a primary molding device included in the present manufacturing apparatus. Fig. 3 is a schematic diagram schematically illustrating a deforming device included in the present manufacturing apparatus.

In the following description, a machining direction (an M direction or MD) is a direction in which a pre-fastener body, a deformed fastener body, and a surface fastener are to be transported in a process of manufacturing a surface fastener and is also referred to as the front-rear direction. The machining direction and the front-rear direction are each the lengthwise direction of the pre-fastener body, the deformed fastener body, and the surface fastener, which are each molded in an elongated shape.

A cross direction (a C direction or CD) is a width direction that is orthogonal to the machining direction and parallel to the upper surface (first surface), which is substantially flat or flat, of a base part or tentative base part and is also referred to as the left-right direction. The cross direction and the left-right direction are each the width direction of the pre-fastener body, the deformed fastener body, and the surface fastener each molded in an elongated shape.

A thickness direction is a direction parallel to a direction orthogonal to the substantially flat or flat upper surface of the base part and is also referred to as the up-down direction or the height direction. The thickness direction and the up-down direction are each a direction orthogonal to both the machining direction and the cross direction. Herein, with reference to the base part, a side toward which engaging elements project is defined as the upper side, and a side opposite the upper side is defined as the lower side.

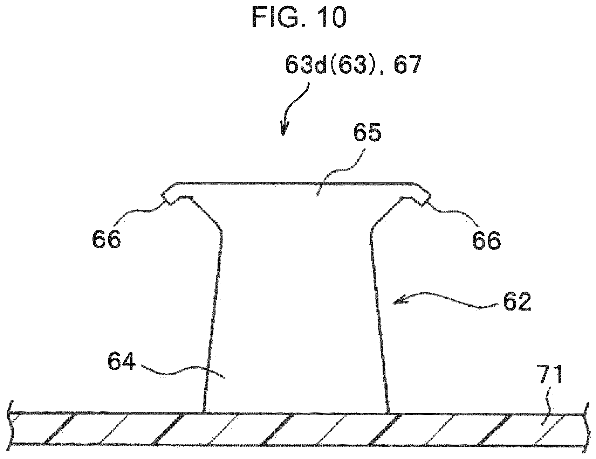

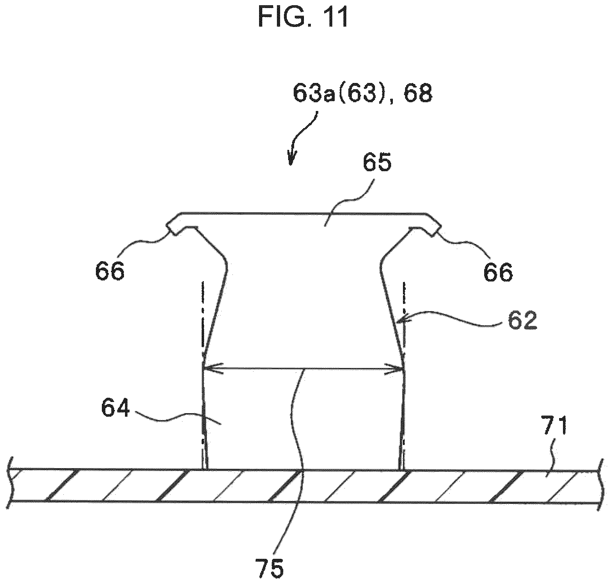

A method of manufacturing a surface fastener according to the present example provides a surface fastener that is made of synthetic resin and in which a plurality of engaging elements 62, including engaging elements 62 illustrated in Figs. 10 and 11, are formed integrally with a base part 71. The present surface fastener is elongated in the machining direction MD of a manufacturing apparatus 1, which is illustrated in Fig. 1.

The manufacturing apparatus 1 configured to manufacture such a surface fastener will now be described with reference to Figs. 1 to 3.

The manufacturing apparatus 1 according to the present example includes a primary molding device 10, which is configured to perform primary molding; a hot pressing device (secondary molding device) 20, which is configured to mold a pre-fastener body (secondary molded body) 60 by performing secondary molding on a primary molded body 50 molded by the primary molding device 10; and a deforming device 30, which is configured to perform a deforming process on the pre-fastener body 60 thus obtained.

In the present invention, the pre-fastener body 60 refers to a molded body or member that is obtained in a case where the manufacture of a surface fastener includes a deforming process, and that is yet to be subjected to the deforming process (particularly, a drawing process 82). The deformed fastener body 70 refers to a fastener body that is obtained through a deforming process, such as the drawing process 82, performed at least once on the pre-fastener body 60, and that has a shape yet to be deformed into a finished surface fastener. Specifically, in the present example, the deformed fastener body 70 is a fastener body that is obtained as follows: the pre-fastener body 60 is subjected to the drawing process 82, and the below-described tentative base part 51 of the pre-fastener body 60 is deformed into a base part 71 in such a manner as to have a further reduced thickness dimension, but the below-described thickness-adjusting process 83 is yet to be performed.

The primary molding device 10 includes a die wheel 11, which is driven to rotate in one direction (the counterclockwise direction in the drawing); a feeding nozzle 15, which is provided facing the peripheral surface of the die wheel 11 and is configured to continuously extrude (or discharge) a molten synthetic resin material; and a pickup roller 16, which is provided on the downstream side relative to the feeding nozzle 15 in the direction of rotation of the die wheel 11.

The die wheel 11 includes a circular cylindrical outer cylinder (outer sleeve) 12, which serves as a die; a circular cylindrical inner cylinder (inner sleeve) 13, which is provided on the inner side of and in close contact with the outer cylinder 12; and a rotatable driving roller 14, which is configured to rotate the outer cylinder 12 and the inner cylinder 13 in the one direction. The rotatable driving roller 14 is provided thereinside with a cooling jacket, which is not illustrated but allows cooling liquid to flow through.

The outer cylinder 12 has a plurality of through-holes 12a, which extend through the outer cylinder 12 from the outer peripheral surface to the inner peripheral surface and each serve as a cavity for molding the below-described primary stem portion 52a of the primary molded body 50. The plurality of through-holes 12a are positioned in correspondence with the positions of the engaging elements 62 in the pre-fastener body 60 to be made.

For example, in the present example, the plurality of through-holes 12a are regularly arrayed in the machining direction MD (the peripheral direction of the outer cylinder 12) and in the cross direction CD (a direction parallel to the center axis of the outer cylinder 12). The through-holes 12a each have a substantially circular truncated conical shape with a circle at the outer peripheral surface of the outer cylinder 12 being greater than a circle at the inner peripheral surface of the outer cylinder 12. In the present invention, the positions, sizes, shapes, and other relevant factors of the plurality of through-holes 12a provided in the outer cylinder 12 are not particularly limited.

The inner cylinder 13 has in the outer peripheral surface thereof a plurality of recessed grooves 13a. The recessed grooves 13a each linearly extend in the cross direction CD parallel to the center axis of the inner cylinder 13 and are each recessed in a size that allow molten synthetic resin to flow in. The plurality of recessed grooves 13a are at regular intervals in the peripheral direction of the inner cylinder 13 (the machining direction MD). With the die wheel 11 assembled, at least a portion of each of the recessed grooves 13a of the inner cylinder 13 intersects the peripheral edges of corresponding ones of the through-holes 12a at the inner peripheral surface of the outer cylinder 12.

The pickup roller 16 includes a pair of an upper nipping roller 16a and a lower nipping roller 16b, which are configured to nip the primary molded body 50 molded on the outer peripheral surface of the die wheel 11 from above and below and pull the primary molded body 50. The upper nipping roller 16a and the lower nipping roller 16b each have at the outer peripheral surface thereof a surface layer, which is not illustrated but is made of elastomer such as polyurethane elastomer.

The hot pressing device 20 includes a pair of upper and lower pressing rollers (calender rollers) 21 and 22, which are provided on the downstream side relative to the pickup roller 16. The upper pressing roller 21 and the lower pressing roller 22 are positioned facing each other with a predetermined gap therebetween. The gap between the upper pressing roller 21 and the lower pressing roller 22 is adjustable by height-adjusting means, which is not illustrated.

The upper pressing roller 21 includes thereinside a heat source, which is not illustrated. The surface temperature of the upper pressing roller 21 is set to a temperature that softens the synthetic resin to be formed into a surface fastener. In the present invention, the configuration of the hot pressing device 20 is not particularly limited as long as the hot pressing device 20 is capable of forming the engaging elements 62 by pressing at least a portion of the primary molded body 50 as to be described below.

As illustrated in Fig. 3, the deforming device 30 is installed on the downstream side relative to the hot pressing device 20 so as to perform at least the drawing process 82 and the thickness-adjusting process 83 on the pre-fastener body (secondary molded body) 60 molded by the hot pressing device 20. The deforming device 30 includes a feeding unit, which is not illustrated but is configured to introduce the pre-fastener body 60 molded by the hot pressing device 20 into the deforming device 30; a discharging unit, which is not illustrated but is configured to deliver a surface fastener obtained through a deforming process toward the downstream side; and a plurality of rotatable rollers 31, which are arranged between the feeding unit and the discharging unit and along a transport path for a processing object (that is, the pre-fastener body 60 and the deformed fastener body 70).

The rotatable rollers 31 are each configured to rotate while the processing object is kept in contact therewith, thereby being capable of transporting the processing object at a speed corresponding to the rotation speed thereof and toward the downstream side. For at least some of the rotatable rollers 31, a heating temperature is set by a controller, which is not illustrated. The at least one rotatable roller 31 is capable of heating at the heating temperature the processing object that is brought into contact with the outer peripheral surface of the roller.

The rotatable rollers 31 provided in the deforming device 30 include a preheating roller 32, a first heating roller 33, and a second heating roller 34, which are configured to heat the pre-fastener body 60; a drawing roller 35, which is configured to perform the drawing process on the pre-fastener body 60 in combination with the second heating roller 34; a pair of upper and lower thickness-adjusting rollers 41 and 42, which are configured to adjust the dimension of the thickness direction of the surface fastener to be manufactured; and a relaxing roller 36.

The preheating roller 32, the first heating roller 33, the second heating roller 34, the drawing roller 35, the upper and lower thickness-adjusting rollers 41 and 42, and the relaxing roller 36 are installed in that order from the feeding unit (the upstream side) toward the discharging unit (the downstream side) of the deforming device 30 along the transport path for the processing object.

The thickness-adjusting rollers 41 and 42 may be located at least on the downstream side relative to the drawing roller 35 and do not necessarily need to be located immediately after the drawing roller 35. The relaxing roller 36 may be located at least on the downstream side relative to the thickness-adjusting rollers 41 and 42 and does not necessarily need to be located immediately after the thickness-adjusting rollers 41 and 42. In the deforming device 30 according to the present example, the drawing process 82 assigned to the second heating roller 34 and the drawing roller 35 and the thickness-adjusting process 83 assigned to the thickness-adjusting rollers 41 and 42 are successively performed. Alternatively, in the present invention, the drawing process 82 and the thickness-adjusting process 83 may be performed apart from each other by using respective devices.

In the deforming device 30, the preheating roller 32, the first heating roller 33, the drawing roller 35, and the relaxing roller 36 are rotatably installed on the lower side of the transport path for the processing object such that the lower surface (back surface) of the below-described tentative base part 51 of the pre-fastener body 60 or the base part 71 of the deformed fastener body 70 is to be brought into direct contact therewith. The second heating roller 34 is rotatably installed on the upper side of the transport path such that the engaging elements 62 of the pre-fastener body 60 are to be brought into direct contact therewith. The second heating roller 34 is provided with a supporting roller (nip roller) 34a, which is configured to support the tentative base part 51 of the pre-fastener body 60 at the lower surface of the tentative base part 51. The upper and lower thickness-adjusting rollers 41 and 42 are positioned apart from each other and are capable of pressing the deformed fastener body 70 in the thickness direction.

In the deforming device 30, the second heating roller 34 and the thickness-adjusting rollers 41 and 42 are located at lower positions in the vertical direction than the preheating roller 32, the first heating roller 33, the drawing roller 35, and the relaxing roller 36 such that the transport path for the processing object meanders up and down.

The preheating roller 32, the first heating roller 33, and the second heating roller 34 of the deforming device 30 are configured to rotate at the same speed as one another to transport the pre-fastener body 60 and to heat the pre-fastener body 60 that is brought into contact with the roller surfaces. Since the preheating roller 32, the first heating roller 33, and the second heating roller 34 are controlled to rotate at the same rotation speed as one another, the pre-fastener body 60 is transported to the second heating roller 34 while being heated but without being drawn. The second heating roller 34 and the supporting roller 34a facing the second heating roller 34 are configured to rotate at respective constant speeds while nipping and holding the pre-fastener body 60 therebetween from above and below.

In the present example, the preheating roller 32 and the first heating roller 33 heat the pre-fastener body 60 while being in contact with the lower surface of the tentative base part 51 of the pre-fastener body 60. The second heating roller 34 heats the pre-fastener body 60 while being in contact with the engaging elements 62 of the pre-fastener body 60. Therefore, before the drawing roller 35 performs the drawing process on the pre-fastener body 60, mainly the lower-surface side (the side where no engaging elements 62 are present) of the pre-fastener body 60 tends to be heated by the preheating roller 32 and the first heating roller 33, whereas mainly the upper-surface side (the side where the engaging elements 62 are present) of the pre-fastener body 60 tends to be heated by the second heating roller 34.

In the deforming device 30 according to the present example, before the drawing process 82, a heating treatment 81 is to be performed on the pre-fastener body 60 by the preheating roller 32, the first heating roller 33, and the second heating roller 34. In the present invention, the means and method of performing the heating treatment 81 before the drawing process 82 are not particularly limited. For example, while the present example employs one preheating roller 32 located on the upstream side relative to the first heating roller 33, the preheating roller may be omitted or a plurality of preheating rollers may be provided on the upstream side relative to the first heating roller 33. The present example employs in the heating treatment 82 to be performed on the upstream side relative to the second heating roller 34 a scheme in which the pre-fastener body 60 is heated by being brought into direct contact with the heated rotatable rollers 31. In addition to or instead of such a scheme, the pre-fastener body 60 may be heated by using, for example, any heating means such as hot air or infrared rays.

The drawing roller 35 is configured to rotate while being in contact with the lower surface of the tentative base part 51 of the pre-fastener body 60. Thus, the drawing roller 35 transports the pre-fastener body 60 and heats the pre-fastener body 60 from the tentative base part 51. The drawing roller 35 is controlled to rotate at a higher rotation speed than the second heating roller 34. In the present example, the rotation speed of the drawing roller 35 is set to a speed of, for example, 110% or higher and 200% or lower; preferably 140% or higher and 170% or lower, than the rotation speed of the second heating roller 34.

The above combination of the second heating roller 34 and the drawing roller 35 enables the performance of the drawing process 82 on the pre-fastener body 60. In the drawing process 82, the tentative base part 51 of the pre-fastener body 60 is drawn in the machining direction MD into a base part 71. Consequently, a deformed fastener body (drawn fastener body) 70 is obtained, which includes the base part 71 and the plurality of engaging elements 62.

In such a case, as described above, the second heating roller 34 transports the pre-fastener body 60 while nipping in combination with the supporting roller 34a the pre-fastener body 60 from above and below. Thus, the pre-fastener body 60 that is being drawn by the drawing roller 35 rotating at a high speed is prevented from slipping on the second heating roller 34. Such prevention enables the pre-fastener body 60 to be delivered toward the drawing roller 35 at a constant speed and stably. Consequently, stable performance of the drawing process 82 on the pre-fastener body 60 is achieved between the second heating roller 34 rotating at a low speed and the drawing roller 35 rotating at a high speed.

The heating temperature of the drawing roller 35 is set lower than the melting point of the synthetic resin to be formed into a surface fastener (the pre-fastener body 60). The heating temperature of the drawing roller 35 may preferably be set higher than the heating temperature of the second heating roller 34.

The upper and lower thickness-adjusting rollers 41 and 42 are located on the downstream side relative to the drawing roller 35 and are arranged in such a manner as to allow the deformed fastener body 70 to pass through between the upper and lower thickness-adjusting rollers 41 and 42. The upper and lower thickness-adjusting rollers 41 and 42 are controlled to rotate at the same rotation speed as each other or at the same rotation speed as the drawing roller 35. In the present example, as illustrated in Fig. 4, the upper and lower thickness-adjusting rollers 41 and 42 are each a straight-type rotatable roller with the outer peripheral surface of the roller being parallel to the direction of the rotation axis.

The upper and lower thickness-adjusting rollers 41 and 42 are provided with a height-adjusting device (not illustrated) capable of adjusting the gap, 43, between the upper and lower thickness-adjusting rollers 41 and 42. The height-adjusting device retains the upper and lower thickness-adjusting rollers 41 and 42 such that the gap 43 produced between the two thickness-adjusting rollers 41 and 42 allows the deformed fastener body 70 subjected to the drawing process 82 to be pressed in the up-down direction.

In the present example, the upper thickness-adjusting roller 41 serves as a heating roller including a heat source. The heating temperature of the upper thickness-adjusting roller 41 is set lower than the melting point of the synthetic resin to be formed into a surface fastener. The lower thickness-adjusting roller 42 includes no heat source. In the present invention, at least one of the upper and lower thickness-adjusting rollers 41 and 42 may serve as a heating roller. That is, the lower thickness-adjusting roller 42 may serve as a heating roller, or both the upper and lower thickness-adjusting rollers 41 and 42 may serve as heating rollers.

The deformed fastener body 70 is introduced into and made to pass through the gap 43 between the upper and lower thickness-adjusting rollers 41 and 42 described above, whereby the deformed fastener body 70 is heated. Furthermore, any portions of the deformed fastener body 70 where the total thickness dimension is greater than the gap 43 between the upper and lower thickness-adjusting rollers 41 and 42 are subjected to a pressing force applied in the up-down direction. Thus, the total thickness dimension of the deformed fastener body 70 passing through between the thickness-adjusting rollers 41 and 42 is reduced in at least some portions in the cross direction CD (width direction), whereby the total thickness dimension of the surface fastener to be manufactured is controlled to be adjusted in the cross direction CD (width direction).

In the present example, as illustrated in Fig. 4, the outer peripheral surface of the upper thickness-adjusting roller 41 and the outer peripheral surface of the lower thickness-adjusting roller 42 extend, for example, parallel to each other such that the gap 43 between the upper and lower thickness-adjusting rollers 41 and 42 is constant in the cross direction CD. Therefore, the total thickness dimension of the surface fastener passing through between the upper and lower thickness-adjusting rollers 41 and 42 is made uniform in the cross direction CD.

In the present invention, the total thickness dimension of the deformed fastener body 70 and the surface fastener refers to a dimension in the thickness direction from the lower surface of the base part 71 of the deformed fastener body 70 or the surface fastener to the upper ends of the engaging elements 62. In the present example, the sizes, shapes, configurations, and other relevant factors of the upper and lower thickness-adjusting rollers 41 and 42 are not particularly limited. The upper and lower thickness-adjusting rollers 41 and 42 may be at least capable of pressing the deformed fastener body 70 or the pre-fastener body 60 in the thickness direction and thus reducing the total thickness dimension in at least a portion in the cross direction CD (width direction).

The relaxing roller 36 is located on the downstream side relative to the upper and lower thickness-adjusting rollers 41 and 42 and is controlled to rotate at a lower rotation speed than the upper and lower thickness-adjusting rollers 41 and 42. If the relaxing roller 36 is located immediately after the thickness-adjusting rollers 41 and 42, the relaxing roller 36 is to rotate while being in contact with the surface fastener subjected to the thickness-adjusting process 83, thereby transporting the surface fastener and heating the surface fastener from the base part 71.

In the present example, the rotation speed of the relaxing roller 36 is set to a speed of, for example, 80% or higher and lower than 100%; preferably 90% or higher and 99% or lower, than the rotation speed of the thickness-adjusting rollers 41 and 42. Such a setting reduces the tension to be applied to the surface fastener between the thickness-adjusting rollers 41 and 42 and the relaxing roller 36. Thus, the shape and size of the surface fastener (for example, the dimension of the base part 71 in the machining direction MD, the shape and thickness dimension of the engaging elements 62, and the like) are stabilized.

Now, a manufacturing method in which a surface fastener is to be manufactured by using the above-described manufacturing apparatus 1 including the primary molding device 10, the hot pressing device 20, and the deforming device 30 will be described.

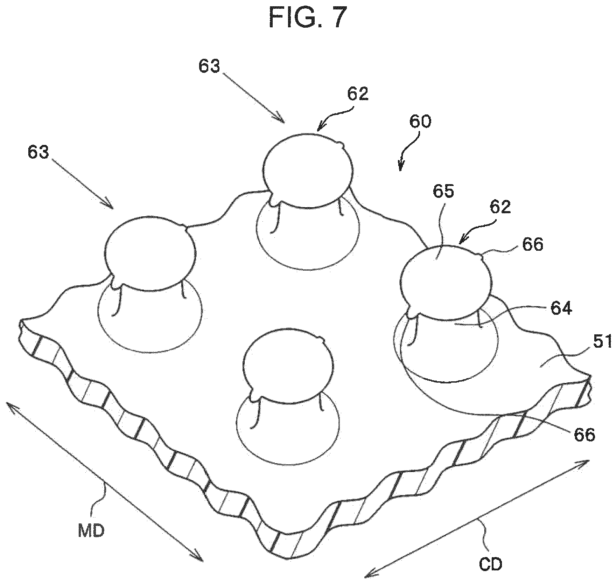

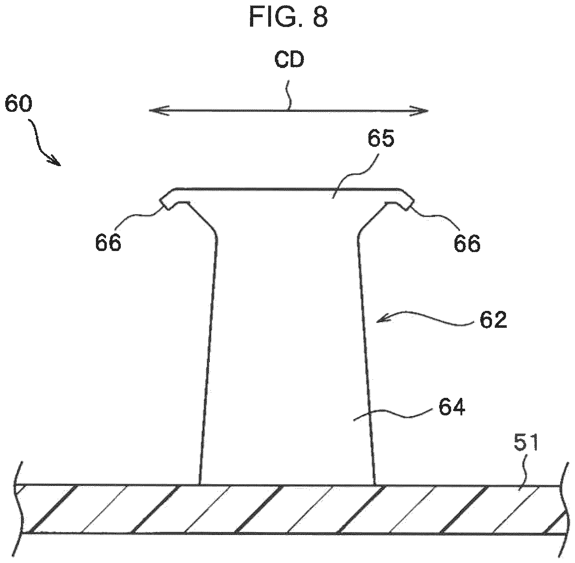

The method of manufacturing a surface fastener according to the present example includes at least a molding step of molding a pre-fastener body 60, such as the one illustrated in Figs. 7 and 8, including a plurality of engaging elements 62 by using the primary molding device 10 and the hot pressing device 20; a drawing step of forming a deformed fastener body 70 by performing the drawing process 82 (deforming process) on the pre-fastener body 60 in the machining direction MD; and a thickness-adjusting step of forming a surface fastener by performing the thickness-adjusting process 83 on the deformed fastener body 70.

The molding step includes at least a primary molding step of molding a primary molded body 50 by using the primary molding device 10; and a secondary molding step of molding a pre-fastener body 60 by heating the primary molded body 50 obtained in the primary molding step and press-deforming some of the below-described primary elements 52 of the primary molded body 50.

In the primary molding step, molten synthetic resin is continuously fed from the feeding nozzle 15 toward the outer peripheral surface of the die wheel 11. In the present example, the synthetic resin to be formed into a surface fastener is polypropylene and is fed in a molten state from the feeding nozzle 15. Thus, a tentative base part 51 is continuously molded between the feeding nozzle 15 and the die wheel 11. Furthermore, a plurality of primary elements (tentative elements) 52 are molded integrally with the tentative base part 51 by the outer cylinder 12 and the inner cylinder 13 of the die wheel 11.

In the present invention, the kind of the synthetic resin to be formed into a surface fastener is not limited. The material for the surface fastener may be, for example, thermoplastic resin such as polypropylene, polyester, nylon, polybutylene terephthalate, or a copolymer of any of the foregoing. The primary molding device may alternatively be configured to, for example, feed a molten synthetic resin material from a feeding nozzle toward the gap between two die wheels positioned facing each other. In such a configuration, the tentative base part 51 is to be molded between the pair of die wheels, and the plurality of primary elements are to be molded by the outer cylinder and the inner cylinder of one of the die wheels.

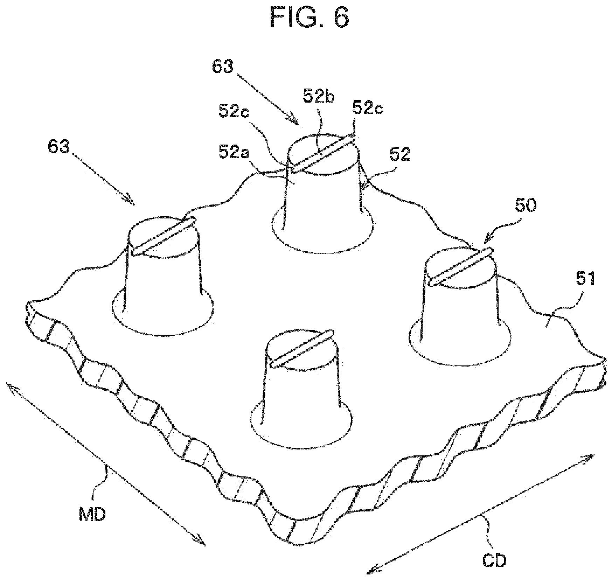

Through the primary molding step according to the present example, a primary molded body 50 such as the one illustrated in Fig. 6 is molded. The primary molded body 50 includes the tentative base part 51, which is a thin plate having an upper surface (first surface) and a lower surface (second surface); and the plurality of primary elements 52, which project from the upper surface of the tentative base part 51. The upper surface and the lower surface of the tentative base part 51 are flat or substantially flat. The primary elements 52 are press-molded in the secondary molding step, thereby being deformed into respective engaging elements 62.

In the present example, the plurality of primary elements 52 are regularly arranged on the upper surface of the tentative base part 51 in a grid pattern in which the primary elements 52 are arrayed in the machining direction MD and in the cross direction CD. Therefore, the plurality of engaging elements 62 molded from the primary elements 52 are also regularly arranged in a grid pattern. In such a configuration, the primary elements 52 (engaging elements 62) are at regular pitches (intervals) in the machining direction MD, thereby forming engaging-element rows 63. Furthermore, a plurality of such engaging-element rows 63 are side by side at regular intervals in the cross direction CD. In the present example particularly, seven engaging-element rows 63 are formed.

In the present invention, factors such as the number, size (width and height), arrangement pattern, and density of the primary elements 52 and the engaging elements 62 obtained through the deformation of the primary elements 52 are not particularly limited and are changeable. For example, the primary elements 52 of the primary molded body 50 and the engaging elements 62 of the surface fastener may be arranged in a staggered pattern in which the engaging elements 62 are positioned alternately or in a zigzag manner with the engaging-element rows 63 that are adjacent to each other in the cross direction CD being shifted relative to each other in the machining direction MD by 1/2 of the pitch of the engaging elements 62.

In the present example, the primary elements 52 each include a primary stem portion 52a, which has a truncated circular conical shape standing from the tentative base part 51; a stick-like rib portion 52b, which is a portion of the upper surface of the primary stem portion 52a that is raised upward; and two projecting portions (primary pawl portions) 52c, which are formed integrally with the rib portion 52b and project from two respective ends of the rib portion 52b. In a plan view of the primary element 52 in such a case, the projecting portions 52c each project outward beyond the upper end face of the primary stem portion 52a. The rib portion 52b and the projecting portions 52c are molded in the primary molding step, in which the synthetic resin flows through the through-holes 12a of the outer cylinder 12 into the recessed grooves 13a of the inner cylinder 13 and further flows along the recessed grooves 13a beyond the through-holes 12a. Accordingly, the rib portions 52b and the projecting portions 52c each extend in the cross direction CD.

In the primary molding step, the molten synthetic resin is carried by the outer peripheral surface of the die wheel 11 and undergoes half a turn while being cooled, whereby the above-described primary molded body 50 is molded. Subsequently, the primary molded body 50 is continuously peeled from the outer peripheral surface of the die wheel 11 by the pickup roller 16.

Then, the primary molded body 50 peeled from the die wheel 11 is transported toward the hot pressing device 20 configured to perform the secondary molding step and is introduced between the upper pressing roller 21 and the lower pressing roller 22 of the hot pressing device 20.

In the secondary molding step, the tentative base part 51 of the primary molded body 50 is supported from below by the lower pressing roller 22. Furthermore, at least the upper ends of the primary elements 52 of the primary molded body 50 are heated to be softened and are pressed from above by the upper pressing roller 21. Thus, a pre-fastener body (secondary molded body) 60 such as the one illustrated in Fig. 7 is obtained, in which a plurality of engaging elements 62 are molded integrally with the upper surface of the tentative base part 51. In the present invention, the pre-fastener body 60 refers to a molded body in a state before the deforming process such as the drawing process 82 is performed, or, if no deforming process such as the drawing process 82 is to be performed, a molded body in a state before the thickness-adjusting process 83 is performed.

In the pre-fastener body 60, the plurality of engaging elements 62 have the same shape as one another and the same thickness dimension, from the upper surface of the tentative base part 51 to the upper end of each of the engaging elements 62, as one another. Such a case where the plurality of engaging elements 62 have the same shape and the same thickness dimension as one another includes not only a case where the plurality of engaging elements 62 have exactly the same shape and exactly the same thickness dimension as one another but also a case where the plurality of engaging elements 62 have substantially the same shape and substantially the same dimension as one another to such an extent that no performance difference among the engaging elements 62 is produced.

The engaging elements 62 of the pre-fastener body 60 each include a stem portion 64, which has a substantially truncated circular conical shape standing from the tentative base part 51; an engaging head 65, which is formed integrally with the upper end of the stem portion 64; and two microsized pawl portions (engaging pawl portions) 66, which each project outward from the outer peripheral edge of the engaging head 65. The engaging head 65 spreads over the entirety of the upper end (distal end) of the stem portion 64 and orthogonally to the thickness direction. In a plan view (not illustrated) of the engaging element 62 that is seen from above, the two pawl portions 66 each project in the cross direction CD from the engaging head 65. In the present invention, the shape and number of the pawl portions and the direction in which each pawl portion projects from the engaging head are not particularly limited.

Subsequently, the pre-fastener body 60 delivered from the hot pressing device 20 is transported to the deforming device 30 configured to perform the drawing process 82 and the thickness-adjusting process 83. In the deforming device 30, the pre-fastener body 60 is introduced from the feeding unit, not illustrated, into the deforming device 30, and the pre-fastener body 60 is subjected to the heating treatment 81, the drawing process 82, the thickness-adjusting process 83, and a relaxing treatment 84 in that order (see Fig. 3).

Specifically, in the heating treatment 81, while the pre-fastener body 60 is transported by the preheating roller 32, the first heating roller 33, and the second heating roller 34 that rotate at the same rotation speed as one another, the pre-fastener body 60 is subjected to the heating treatment 81. In such a case, the lower surface of the tentative base part 51 of the pre-fastener body 60 is brought into contact with the roller surfaces of the preheating roller 32 and the first heating roller 33. Thus, the pre-fastener body 60 is heated from the lower surface of the tentative base part 51 to a temperature at which the pre-fastener body 60 is drawable.

Subsequently, the pre-fastener body 60 having passed the preheating roller 32 and the first heating roller 33 is brought into contact with the second heating roller 34 at the engaging elements 62 (the upper end) thereof, whereby the pre-fastener body 60 is heated.

The pre-fastener body 60 having passed the second heating roller 34 is then subjected to the uniaxial drawing process 82 (drawing step) in which the pre-fastener body 60 is drawn in the machining direction MD between the second heating roller 34 and the drawing roller 35 that is rotating at a higher rotation speed than the second heating roller 34.

In the uniaxial drawing process 82, the heating temperature of the drawing roller 35 is set lower than the melting point of the synthetic resin, as described above. Furthermore, the rotation speed of the drawing roller 35 is set to a speed of 110% or higher and 200% or lower; preferably 140% or higher and 170% or lower, than the rotation speed of the second heating roller 34. Thus, a tension for drawing the pre-fastener body 60 in the machining direction MD between the second heating roller 34 and the drawing roller 35 is stably generated. Hence, stable performance of the drawing process 82 in the machining direction MD on the pre-fastener body 60 is achieved.

Employing the above uniaxial drawing process 82 facilitates the drawing of the tentative base part 51 in the machining direction MD in obtaining a base part 71 having an upper surface (first surface) and a lower surface (second surface). Furthermore, the thickness of the base part 71 between the upper surface and the lower surface thereof is reduced to be smaller than the thickness of the tentative base part 51 obtained after the secondary molding step (in other words, the thickness dimension of the base part 71 between the upper surface and the lower surface thereof is reduced to be smaller than the thickness dimension of the tentative base part 51). Simultaneously, the width dimension(the dimension in the cross direction CD) of the base part 71 that is drawn in the machining direction MD is reduced.

Furthermore, since the base part 71 is brought into contact with the drawing roller 35, the amount of thermal deformation of the engaging elements 62 is smaller than that of the base part 71. Therefore, the shapes of the engaging heads 65 and the pawl portions 66 of the engaging elements 62 are maintained. Nevertheless, the engaging elements 62 are integrated with the tentative base part 51. Therefore, when the tentative base part 51 is drawn in the machining direction MD in the uniaxial drawing process 82 and is thus deformed into a base part 71, a portion of the synthetic resin forming each of the engaging elements 62 (particularly the stem portion 64) moves toward the tentative base part 51 (the base part 71). Consequently, the thickness dimension of the engaging element 62 from the base part 71 becomes smaller than before the performance of the drawing process.

In such a case particularly, performing the uniaxial drawing process 82 on the pre-fastener body 60 causes the base part 71 to not only stretch in the machining direction MD but also contract in the width direction. Accordingly, the thickness dimensions (height dimensions) of those engaging elements 62 located in a central area, in the cross direction CD (the width direction), of the pre-fastener body 60 is decreased by a greater amount than the thickness dimensions of those engaging elements 62 located in outer end areas on the left and right sides in the cross direction CD. Thus, the total thickness dimension of the deformed fastener body 70 is varied in the cross direction CD by about 15 µm or greater between the central area and the outer end areas on the left and right sides in the cross direction CD.

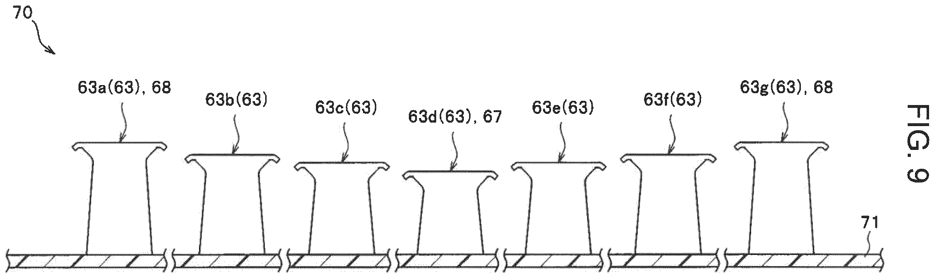

For example, in the pre-fastener body 60 according to the present example, the plurality of engaging-element rows 63 each extending in the machining direction MD are located at respectively different positions in the cross direction CD as described above. Fig. 9 illustrates the plurality of engaging-element rows 63 located in seven respective areas that are divided in the cross direction CD, with one engaging-element row 63 being illustrated in each of the areas. As in Fig. 9, for example, in a section of the pre-fastener body 60 that is taken orthogonally to the machining direction MD and through a region where the engaging elements 62 are present, one of the engaging-element rows 63 that is located at the leftmost position in the cross direction CD is defined as a first engaging-element row 63a. Furthermore, the other engaging-element rows 63 from the one in an area adjacent to the first engaging-element row 63a to the rightmost one are defined in that order as second to seventh engaging-element rows 63b to 63g.

In the pre-fastener body 60 subjected to the uniaxial drawing process 82 according to the present example, as illustrated in Fig. 9, the engaging element 62 in the fourth engaging-element row 63d located in the central area in the cross direction CD has the smallest thickness dimension. The engaging element 62 in each of the engaging-element rows 63 that are located on the outer sides relative to the fourth engaging-element row 63d in the cross direction CD has a greater thickness dimension than the engaging element 62 in each of the engaging-element rows 63 that are located on the inner side relative to the engaging-element row 63 of interest in the cross direction CD. The thickness dimension of the engaging element 62 is greatest in the first engaging-element row 63a located at the leftmost position in the cross direction CD and in the seventh engaging-element row 63g located at the rightmost position. In the present invention, the engaging-element row 63 located in the central area in the cross direction CD is also referred to as a center engaging-element row 67, and the engaging-element rows 63 located at the respective outermost positions in the cross direction CD are each also referred to as an end engaging-element row 68.

Thus, performing the uniaxial drawing process 82 on the pre-fastener body 60 provides the deformed fastener body 70 including the engaging elements 62 formed on the base part 71 elongated in the machining direction MD, with the heights of the engaging elements 62 varying among engaging-element rows 63 that are located at different positions in the width direction. Subsequently, the resulting deformed fastener body 70 passes the drawing roller 35 and is transported toward the gap between the upper and lower thickness-adjusting rollers 41 and 42.

Then, the upper and lower thickness-adjusting rollers 41 and 42 perform the thickness-adjusting process 83 (the thickness-adjusting step) on the deformed fastener body 70 subjected to the drawing process 82. In the thickness-adjusting step, the gap 43 between the upper and lower thickness-adjusting rollers 41 and 42 is set to a size that matches the total thickness dimension of the surface fastener to be manufactured. The upper and lower thickness-adjusting rollers 41 and 42 are each controlled to rotate at the same rotation speed as the drawing roller 35. Furthermore, as described above, the heating temperature of the upper thickness-adjusting roller 41 is set lower than the melting point of the synthetic resin to be formed into a surface fastener. The temperature of the lower thickness-adjusting roller 42 is not particularly controlled and is left in an atmosphere at room temperature.

Thus, the thickness-adjusting process 83 is achieved by causing the deformed fastener body 70 including the engaging elements 62 having different thickness dimensions at different widthwise positions to pass through between the upper and lower thickness-adjusting rollers 41 and 42. In the thickness-adjusting process 83, the deformed fastener body 70 is pressed in the thickness direction while being heated, whereby at least a portion (particularly, at least some of the engaging elements 62) of the deformed fastener body 70 in the cross direction CD is deformed.

In such a process, a portion of the deformed fastener body 70 where the engaging elements 62 are high (for example, a portion where the end engaging-element row 68 is present) receives a relatively large pressing force. Therefore, the thickness dimension of the deformed fastener body 70 in that portion is reduced by a large amount. On the other hand, a portion of the deformed fastener body 70 where the engaging elements 62 are low (for example, a portion where the center engaging-element row 67 is present) receives a relatively small pressing force. Therefore, the thickness dimension of the deformed fastener body 70 in that portion is reduced by a small amount (or the thickness dimension is not reduced). Thus, in the thickness-adjusting process 83, the amount of reduction in the thickness dimension of the engaging elements 62 that is produced by pressing is made to vary among the engaging elements 62 whose thickness dimensions vary with the positions thereof in the cross direction CD, whereby the thickness dimension of the surface fastener to be manufactured is adjusted.

In the present example, the deformed fastener body 70 to be subjected to the thickness-adjusting process 83 includes, as described above for example, the first to seventh engaging-element rows 63a to 63g in seven respective areas that each extend in the machining direction MD and are located at different positions in the cross direction CD. Furthermore, the engaging elements 62 in each of the engaging-element rows 63 have a greater thickness dimension than the engaging elements 62 in one of the engaging-element rows 63 that is adjacent thereto on the inner side relative to the engaging-element row 63 of interest in the cross direction CD. Furthermore, the thickness dimension of the engaging elements 62 is smallest in the center engaging-element row 67 (the fourth engaging-element row 63d) located in the central area in the cross direction CD.

Hence, when the thickness-adjusting process 83 is performed on the above deformed fastener body 70, a large pressing force is applied to press the engaging elements 62 in the end engaging-element rows 68 (the first engaging-element row 63a and the seventh engaging-element row 63g) located at the respective outermost positions in the cross direction CD. Therefore, the thickness dimension of such engaging elements 62 is reduced by a great amount. The pressing force to be applied to press the engaging elements 62 is smaller in those engaging-element rows 63 that are located at more inner positions in the cross direction CD. Thus, the amount of reduction in the thickness dimension is gradually reduced.

The engaging elements 62 in the center engaging-element row 67 (the fourth engaging-element row 63d) are pressed with the smallest pressing force among the engaging elements 62 in the engaging-element rows 63 in the seven areas and are therefore the thickness dimension of the engagement element 62 can be reduced at the smallest reducing amount, or can be held without being changed by the thickness-adjusting process 83.

Hence, in the present example, performing the thickness-adjusting process 83 described above provides a surface fastener from the deformed fastener body 70 and also makes the total thickness dimension of the surface fastener uniform in the cross direction CD through the adjustment of the thickness dimension of the surface fastener that is performed in the cross direction CD. Specifically, it is possible to suppress the variation in the cross direction CD in the total thickness dimension of the surface fastener to about 10 µm or smaller between the position in the cross direction CD where the thickness dimension is largest and the position in the cross direction CD where the thickness dimension is smallest.

As illustrated in Fig. 10, the engaging elements 62 in the center engaging-element row 67 after being subjected to the thickness-adjusting process 83 have the same shape or substantially the same shape as before being subjected to the thickness-adjusting process 83 (see Fig. 9). Therefore, the stem portion 64 of each of the engaging elements 62 in the center engaging-element row 67 has a substantially truncated circular conical shape with the area of a cross section thereof orthogonal to the thickness direction being gradually reduced in a direction away from the base part 71.

In the thickness-adjusting step according to the present example, the thickness dimension of the engaging elements 62 in the end engaging-element rows 68 (the first engaging-element row 63a and the seventh engaging-element row 63g) located at the respective outermost positions in the cross direction CD are greatly reduced by being subjected to the thickness-adjusting process 83. Consequently, such engaging elements 62 are deformed as illustrated in Fig. 11. Now, the shape of the engaging elements 62 in the end engaging-element rows 68 will be described specifically. For example, when such an engaging element 62 is seen from one side (the front side) in the machining direction MD, the stem portion 64 is shaped such that a thickness direction central part of the stem portion 64 has a greater stem width 75 than in the engaging element 62 (see Fig. 9) obtained before being subjected to the thickness-adjusting process 83.

Herein, the stem width 75 refers to, when the engaging element 62 is seen in a direction orthogonal to the thickness direction (for example, in the machining direction MD or the cross direction CD), the maximum dimension of the stem portion 64 in the direction orthogonal to the thickness direction, or the diameter of the stem portion 64 in a section of the engaging element 62 that is taken orthogonally to the thickness direction. Furthermore, letting the thickness dimension from the proximal end of the stem portion 64 where the stem portion 64 is connected to the base part 71 to the boundary between the stem portion 64 and the engaging head 65 be 100%, the thickness direction central part of the stem portion 64 refers to a part within a range of 25% or more and 75% or less from the proximal end of the stem portion 64 and spreading in the direction orthogonal to the thickness direction.

In the end engaging-element rows 68 particularly, the stem portion 64 of each of the engaging elements 62 has a barrel shape as illustrated in Fig. 11, with the stem width 75 in the central part of the stem portion 64 in the thickness direction being greater than the stem width 75 at each of the upper and lower ends of the stem portion 64 in the thickness direction.

In such a shape, the stem width 75 in the thickness direction central part of the stem portion 64 is greater than the width (the dimension in the direction orthogonal to the thickness direction) at the proximal end where the stem portion 64 and the base part 71 are connected to each other. Furthermore, the stem width 75 in the thickness direction central part of the stem portion 64 is greater than the width (the dimension in the direction orthogonal to the thickness direction) at the boundary between the stem portion 64 and the engaging head 65 and smaller than the largest width of the engaging head 65 (that is, the width at the upper end of the engaging head 65).

The stem portion 64 having the above barrel shape provides an increased strength to the engaging element 62. Specifically, the plurality of engaging elements 62 according to the present example include at least first engaging elements 62, which are located in the center engaging-element row 67 (the fourth engaging-element row 63d); and second engaging elements 62, which are located in the end engaging-element rows 68 (the first engaging-element row 63a and the seventh engaging-element row 63g) and each having a greater stem width 75 than the first engaging elements 62.

In the end engaging-element rows 68, there is no change or substantially no change in the shapes of the engaging head 65 and the pawl portions 66 of each of the engaging elements 62 before and after the thickness-adjusting process 83. Accordingly, the engaging head 65 and the pawl portions 66 of each of such engaging elements 62 subjected to the thickness-adjusting process 83 have respective shapes identical to the shapes of the engaging head 65 and the pawl portions 66 of the engaging element 62 obtained immediately after the drawing process 82, and also identical to the shapes of the engaging head 65 and the pawl portions 66 of the engaging element 62 obtained before being introduced into the deforming device 30 (that is, the engaging element 62 of the pre-fastener body 60).

In the present example, focusing on the engaging-element rows 63 (the second, third, fifth, and sixth engaging-element rows 63b, 63c, 63e, and 63f) located on the inner side relative to the end engaging-element rows 68 in the cross direction CD, the closer to the center engaging-element row 67 (the fourth engaging-element row 63d) the engaging-element row 63 of interest is located, the smaller the stem width 75 in the thickness direction central part of the stem portions 64 thereof becomes. Furthermore, such stem portions 64 each have a transitional shape between the barrel shape illustrated in Fig. 11 and the substantially truncated circular conical shape illustrated in Fig. 10. The closer to the center engaging-element row 67 the engaging-element row 63 of interest is located, the closer to the substantially truncated circular conical shape illustrated in Fig. 10 the shape of the stem portion 64 thereof becomes. On the other hand, the closer to either of the end engaging-element rows 68 the engaging-element row 63 of interest is located, the closer to the barrel shape illustrated in Fig. 11 the shape of the stem portion 64 thereof becomes.

Specifically, after the thickness-adjusting step, the engaging-element rows 63 according to the present example in the seven areas illustrated in Fig. 9 are categorized into the following four kinds of engaging elements 62: the engaging elements 62 in the first engaging-element row 63a and the seventh engaging-element row 63g, the engaging elements 62 in the second engaging-element row 63b and the sixth engaging-element row 63f, the engaging elements 62 in the third engaging-element row 63c and the fifth engaging-element row 63e, and the engaging elements 62 in the fourth engaging-element row 63d. The four kinds of engaging elements 62 are different from one another in the shape of the stem portion 64 (particularly in the shape of the central part of the stem portion 64 in the thickness direction) but are the same as one another in the thickness dimension from the base part 71 to the upper end of the engaging head 65.

The engaging elements 62 are not limited to those having the above four kinds of shapes. As described above, the closer to the center engaging-element row 67 from either of the end engaging-element rows 68, the smaller the stem width 75 in the thickness direction central part of the stem portion 64, with the shape of the stem portion 64 changing smoothly from the barrel shape illustrated in Fig. 11 to the substantially truncated circular conical shape illustrated in Fig. 10.

For example, dividing the plurality of engaging-element rows 63 into nine areas in the cross direction CD, the variation in the stem width 75 among five areas from the leftmost area to the central area in the cross direction CD is quantified as follows. Regarding the engaging elements 62 in the five areas, the stem widths 75 in the thickness direction central parts of the stem portions 64 of the respective engaging elements 62 were measured (n = 16), and the coefficient of variation representing the variation in the measured stem widths 75 among the five areas was calculated. As a result, in a case where the thickness-adjusting step is skipped, the coefficient of variation in the stem width 75 of the thickness direction central part among the engaging elements 62 in the above five areas defined in the cross direction CD was a small value of below 0.020. On the other hand, in the case of the surface fastener manufactured in the present example, the coefficient of variation in the stem width 75 of the thickness direction central part among the engaging elements 62 in the above five areas defined in the cross direction CD was a large value of 0.020 or greater (specifically, 0.023). Thus, it has been found for the surface fastener manufactured in the present example that there is a large variation in the stem width 75 of the engaging element 62 among the above five areas defined in the cross direction CD. Such a variation in the stem width 75 of the engaging element 62 is produced by performing the thickness-adjusting process 83 according to the present example.

In the thickness-adjusting process 83 according to the present example, although the thickness dimensions of the engaging elements 62 are varied by deforming the stem portions 64 of the engaging elements 62, the engaging heads 65 and the pawl portions 66 of the engaging elements 62 are not deformed. Therefore, in the surface fastener obtained through the thickness-adjusting process 83, the plurality of engaging elements 62 located at respectively different positions in the cross direction CD and including the stem portions 64 of different shapes include the engaging heads 65 and the pawl portions 66 that both have identical shapes. Herein, the case where the engaging heads 65 and the pawl portions 66 both have identical shapes includes not only a case where the engaging heads 65 and the pawl portions 66 have exactly the same respective shapes and exactly the same respective sizes but also a case where the engaging heads 65 and the pawl portions 66 have substantially the same respective shapes and substantially the same respective sizes to such an extent that no variations in the performance of the engaging elements 62 are produced.

After the above thickness-adjusting process 83 is performed, the relaxing treatment 84 is performed on the surface fastener having the engaging elements 62 illustrated in Figs. 10 and 11. In the relaxing treatment 84, the surface fastener is transported between the thickness-adjusting rollers 41 and 42 and the relaxing roller 36, which rotates at a lower speed than the thickness-adjusting rollers 41 and 42, such that the tension to be applied to the surface fastener is reduced. Thus, the shape of the surface fastener is stabilized between the thickness-adjusting rollers 41 and 42 and the relaxing roller 36, with the total thickness dimension being uniform in the cross direction CD.

Subsequently, the surface fastener having passed the relaxing roller 36 is delivered to the outside from the discharging unit, not illustrated, of the deforming device 30. The surface fastener discharged from the deforming device 30 is wound into a roll by, for example, a collecting roller or the like and is collected. Alternatively, the surface fastener may be collected after being transported from the deforming device 30 to a cutting unit, not illustrated, and being cut by the cutting unit into pieces each having a predetermined width dimension and/or length dimension.

Through the manufacturing method according to the present example including the processes and treatments from the molding step to the relaxing treatment 84 as described above, a surface fastener is manufactured.

The surface fastener obtained through the manufacturing method according to the present example includes the plurality of engaging elements 62 on the upper surface of the base part 71. Since the surface fastener according to the present example is subjected to the uniaxial drawing process 82 performed in the machining direction MD, the thickness of the base part 71 thereof is smaller than in, for example, a known surface fastener that is obtained without being subjected to the drawing process 82. Therefore, the surface fastener according to the present example provides advantageous effects brought by the thinning of the base part 71, such as increased flexibility, a reduced weight, increased productivity, and a reduced manufacturing cost.

While the surface fastener according to the present example is obtained through the uniaxial drawing process 82, since the thickness-adjusting process 83 is performed in the machining direction MD in continuation of the uniaxial drawing process 82, the total thickness dimension of the surface fastener is controlled in the cross direction CD. Thus, the variation in the total thickness dimension of the surface fastener in the cross direction CD (width direction) is prevented from occurring or is reduced. Consequently, the resulting surface fastener has a uniform total thickness dimension over the entirety in the cross direction CD and over the entirety in the machining direction MD. That is, the manufacturing method according to the present example enables stable manufacture of a surface fastener whose total thickness dimension is constant in the width direction between a central area and left and right end areas.

Accordingly, the base part 71 of the surface fastener manufactured is prevented from, for example, having defects such as slack or wavy wrinkles due to the thickness variation in the width direction. Furthermore, partial bulging of the left and right end areas of the surface fastener and wrinkles (wrinkles due to winding) in the base part 71 that may occur when the surface fastener manufactured is wound to be collected by the collecting roller as described above are prevented. Therefore, a surface fastener that exhibits favorable quality and performance is stably provided, with the prevention of deterioration in the quality or performance of the surface fastener that may be caused by the above defects or any other troubles at the time of collection.

In the method of manufacturing a surface fastener according to the above example, the deformed fastener body 70 subjected to the drawing process 82 and thus having a total thickness dimension varying with the position in the cross direction CD (width direction) is then subjected to the thickness-adjusting process 83, whereby a surface fastener having a total thickness dimension that is uniform in the cross direction CD is obtained.

In the present invention, performing the thickness-adjusting process 83 on, for example, the pre-fastener body 60 (see Figs. 7 and 8) obtained in the molding step according to the above example provides a surface fastener not only having a total thickness dimension that is uniform in the cross direction CD but also including engaging elements 62 whose dimensions in thickness direction are intentionally or positively varied with the positions thereof in the width direction.

For example, in a pre-fastener body 60 obtained without being subjected to the drawing process 82, there may be a difference of about 10 µm in the thickness dimension between the position in the cross direction CD where the total thickness dimension is largest and the position in the cross direction CD where the total thickness dimension is smallest, under the influence of variations in the cross direction CD regarding the processing conditions such as the molding temperature and the cooling temperature; and the influence of dimensional accuracy in the processing of relevant dies. If such a pre-fastener body 60 is introduced and made to pass through between the upper and lower thickness-adjusting rollers 46 and 47, the pressing force to be applied to the engaging elements 62 is varied with the position of the pre-fastener body 60 in the cross direction CD. Thus, the difference in the thickness dimension is reduced to about 5 µm or smaller between the position in the cross direction CD where the total thickness dimension is largest and the position in the cross direction CD where the total thickness dimension is smallest.

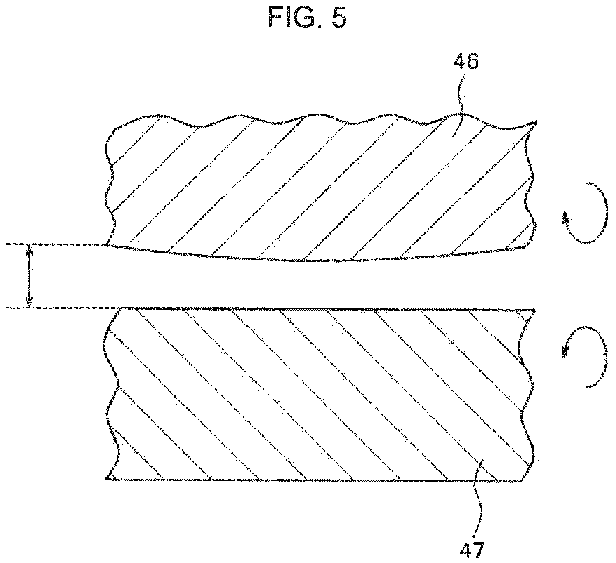

Alternatively, the thickness-adjusting process 83 to be performed on the pre-fastener body 60 illustrated in Figs. 7 and 8 whose total thickness dimension from the lower surface of the tentative base part 51 to the upper ends of the engaging elements 62 is constant in the width direction may be performed by using a pair of upper and lower thickness-adjusting rollers 46 and 47 according to a modification illustrated in Fig. 5, after the heating treatment 81 (see Fig. 3) according to the above example is performed but the drawing process 82 is skipped.

The upper and lower thickness-adjusting rollers 46 and 47 according to the present modification are positioned apart from each other in such a manner as to allow the pre-fastener body 60 to pass through between the two thickness-adjusting rollers 46 and 47. The upper and lower thickness-adjusting rollers 46 and 47 are provided with a height-adjusting device (not illustrated) capable of adjusting the gap between the thickness-adjusting rollers 46 and 47.

In the present modification, the upper thickness-adjusting roller 46 is a crown-type rotatable roller with the outer peripheral surface of the roller being convex in a central portion thereof in the cross direction CD, and serves as a heating roller including a heat source. The lower thickness-adjusting roller 47 is a straight-type rotatable roller with the outer peripheral surface of the roller being parallel to the direction of the rotation axis.

When a pre-fastener body 60 whose total thickness dimension is constant in the width direction is introduced and made to pass through between the upper and lower thickness-adjusting rollers 46 and 47, the pre-fastener body 60 is pressed in the thickness direction. In such a case particularly, the gap between the upper and lower thickness-adjusting rollers 46 and 47 is small at the central portion, in the cross direction CD, of the upper thickness-adjusting roller 46 and large at outer portions in the cross direction CD.

Thus, at the central portion of the upper and lower thickness-adjusting rollers 46 and 47 in the cross direction CD, a relatively large pressing force is applied to the pre-fastener body 60, whereby the amount of reduction in the thickness dimension of the pre-fastener body 60 is increased. On the other hand, at the outer portions in the cross direction CD, the amount of reduction in the thickness dimension of the pre-fastener body 60 is reduced (or the thickness dimension is not reduced). Consequently, the surface fastener thus manufactured has a total thickness dimension that is intentionally or positively varied in the cross direction CD such that the total thickness dimension is small at the central portion in the cross direction CD and gradually increases toward the outer sides in the cross direction CD.

Alternatively, the upper thickness-adjusting roller 46 may be a crown-type rotatable roller with a central portion thereof in the cross direction CD being concave, and is not particularly limited as long as the upper thickness-adjusting roller 46 is capable of applying different pressing forces to engaging elements 62 located at different positions in the cross direction CD.

As another alternative, the upper thickness-adjusting roller 46 may be a rotatable roller whose diameter is varied such that the outer peripheral surface of the roller has steps arranged in the cross direction CD. If a pre-fastener body 60 having, for example, a total thickness dimension that is constant in the width direction is introduced and made to pass through between such upper and lower thickness-adjusting rollers 46 and 47, different pressing forces are applied to different areas of the pre-fastener body 60 that are defined in the cross direction CD. Subsequently, the surface fastener subjected to the thickness-adjusting process is cut into pieces each having a predetermined width and in correspondence with the areas subjected to the respective pressing forces. Thus, a plurality of surface fasteners having respectively different total thickness dimensions are obtained in a single manufacturing process.

In the present invention, the pre-fastener body 60 may be subjected to any deforming process other than the drawing process 82, instead of the drawing process 82 or in addition to the drawing process 82, to obtain a deformed fastener body; and the deformed fastener body thus obtained may then be subjected to the thickness-adjusting process 83. For example, the pre-fastener body 60 illustrated in Figs. 7 and 8 may be subjected to an embossing process, a slit-forming process, or a perforating process. Performing the thickness-adjusting process 83 on a deformed fastener body subjected to at least one of the foregoing deforming processes enables the manufacture of a surface fastener whose total thickness dimension is uniform in the cross direction CD, or the manufacture of a surface fastener whose thickness dimension is intentionally or positively varied.

In the above example, the pre-fastener body 60 is made by performing the primary molding step with the use of the primary molding device 10 and the secondary molding step with the use of the hot pressing device 20. However, in the present invention, the method and means of molding a pre-fastener body are not particularly limited. In the present invention, for example, the pre-fastener body 60 to be delivered to the deforming step may be made by, instead of performing the secondary molding step in which thermal deformation is caused as in the above example, performing a molding step with the use of a molding device having cavities with which the engaging elements 62 each including the stem portion 64 and the engaging head 65 are moldable. Reference Signs List

1 manufacturing apparatus
10 primary molding device
11 die wheel
12 outer cylinder (outer sleeve)
12a through-hole
13 inner cylinder (inner sleeve)
13a recessed groove
14 rotatable driving roller
15 feeding nozzle
16 pickup roller
16a upper nipping roller
16b lower nipping roller
20 hot pressing device (secondary molding device)
21 upper pressing roller
22 lower pressing roller
30 deforming device
31 rotatable roller
32 preheating roller
33 first heating roller
34 second heating roller
34a supporting roller (nip roller)
35 drawing roller
36 relaxing roller
41 upper thickness-adjusting roller
42 lower thickness-adjusting roller
43 gap
46 upper thickness-adjusting roller
47 lower thickness-adjusting roller
50 primary molded body
51 tentative base part
52 primary element (tentative element)
52a primary stem portion
52b rib portion
52c projecting portion (primary pawl portion)
60 pre-fastener body (secondary molded body)
62 engaging element
63 engaging-element row
63a to 63g first to seventh engaging-element rows
64 stem portion
65 engaging head
66 pawl portion (engaging pawl portion)
67 center engaging-element row
68 end engaging-element row
70 deformed fastener body
71 base part
75 stem width in thickness direction central part of stem portion
81 heating treatment
82 drawing process
83 thickness-adjusting process
84 relaxing treatment
CD cross direction
MD machining direction

## Claims

1. A method of manufacturing a surface fastener made of synthetic resin, the surface fastener including a base part (71) and a plurality of engaging elements (62), the base part (71) having a first surface and a second surface that are located opposite each other, the engaging elements (62) each including a stem portion (64) and an engaging head (65), the stem portion (64) projecting in a thickness direction from the first surface of the base part (71), the engaging head (65) formed integrally with a distal end of the stem portion (64), the engaging head (65) having a shape that spreads outwardly in a direction orthogonal to the thickness direction to the distal end of the stem portion (64), the method being **characterized by** comprising:
a molding step of molding a pre-fastener body (60) from the synthetic resin that is melted, the pre-fastener body (60) including the plurality of engaging elements (62); and
a thickness-adjusting step of adjusting, after the molding step, a thickness dimension of the surface fastener by pressing the pre-fastener body (60) or a deformed fastener body (70) in which at least a portion of the pre-fastener body (60) is subject to at least once deformation process, in the thickness direction to decrease the thickness dimension of at least a portion of the pre-fastener body (60) or the deformed fastener body (70),
wherein, when a direction orthogonal to a machining direction (MD) of the thickness-adjusting step is defined as a cross direction (CD), the thickness-adjusting step includes making difference of reduction amounts of the stem portions (64)in a thickness dimension between at least two of the engaging elements (62) by applying respectively different pressing forces to the at least two engaging elements (62), the at least two engaging elements (62) being located at different positions each other of the pre-fastener body (60) or the deformed fastener body (70) in the cross direction (CD).

2. The method of manufacturing a surface fastener according to Claim 1, **characterized in that**
the method includes:
introducing the pre-fastener body (60) or the deformed fastener body (70) between a pair of upper and lower thickness-adjusting rollers (41, 42, 46, 47) to press the pre-fastener body (60) or the deformed fastener body (70) in the thickness direction, in the thickness-adjusting step; and
heating at a temperature lower than or equal to a melting point of the synthetic resin the pre-fastener body (60) or the deformed fastener body (70) with at least one of the upper thickness-adjusting roller (41, 46) and the lower thickness-adjusting roller (42, 47).

3. The method of manufacturing a surface fastener according to Claim 1 or 2, **characterized in that**
the method includes:
molding a tentative base part (51) that is formed integrally with the plurality of engaging elements (62) and that supports the engaging elements (62) in the molding step; and
forming the deformed fastener body (70) after the molding step and before performing the thickness-adjusting step, the deformed fastener body (70) being obtained by performing a drawing step of drawing the pre-fastener body (60) in the machining direction (MD) to decrease a thickness dimension of the tentative base part (51) and to deform the tentative base part into the base part (71).

4. The method of manufacturing a surface fastener according to any of Claims 1 to 3, **characterized in that**
the method includes applying a greater pressing force to the engaging elements (62) that are located on an outer side relative to the central area in the cross direction (CD) than to the engaging elements (62) that are located in the central area in the cross direction (CD) in the thickness-adjusting step.

5. The method of manufacturing a surface fastener according to any of Claims 1 to 4, **characterized in that**
the method includes making a dimension of a total thickness of the surface fastener uniform in the cross direction (CD) by performing pressing in the thickness direction, the dimension of the total thickness being a dimension in the thickness direction from the second surface of the base part (71) to top ends of the engaging elements (62) in the thickness-adjusting step.

6. The method of manufacturing a surface fastener according to any of Claims 1 to 5, **characterized in that**
the method includes forming the engaging elements (62) of at least two kinds at respectively different positions in the cross direction (CD), the engaging elements (62) of the at least two kinds differ from each other in the stem widths (75) at a central part of the stem portions (64) in the thickness direction in the thickness-adjusting step.

7. The method of manufacturing a surface fastener according to any of Claims 1 to 6, **characterized in that**
the method includes forming at least a first engaging element (62) and a second engaging element (62) in the thickness-adjusting step, the first engaging element (62) being disposed in a central area of the base part (71) in the cross direction (CD), the second engaging element (62) being disposed on an outer side relative to the central area in the cross direction (CD) and having a greater stem width (75) at a central part of the stem portions (64) in the thickness direction than the first engaging element (62) .

8. The method of manufacturing a surface fastener according to any of Claims 1 to 7, **characterized in that**
the method includes
forming at least two of the engaging elements (62) such that the respective engaging heads (65) have identical shapes, the at least two engaging elements (62) being located at respectively different positions in the cross direction (CD) .
